(19) Europäisches Patentamt / European Patent Office / Office européen des brevets

(11) **EP 4 324 798 A1**

(12) **EUROPEAN PATENT APPLICATION**
published in accordance with Art. 153(4) EPC

(43) Date of publication:
**21.02.2024 Bulletin 2024/08**

(21) Application number: **22788011.9**

(22) Date of filing: **28.03.2022**

(51) International Patent Classification (IPC):
**C03C 27/12** (2006.01)    **C08J 3/12** (2006.01)

(52) Cooperative Patent Classification (CPC):
**B32B 17/00; C08J 3/12**

(86) International application number:
**PCT/JP2022/015060**

(87) International publication number:
**WO 2022/220086 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2021 JP 2021067294**

(71) Applicant: **Kuraray Co., Ltd.**
**Kurashiki-shi, Okayama 710-0801 (JP)**

(72) Inventors:
- **TAKASUGI, Akio**
  **Tsukuba-shi, Ibaraki 305-0841 (JP)**
- **NIIMURA, Takuro**
  **Tsukuba-shi, Ibaraki 305-0841 (JP)**
- **NAKAHARA, Atsuhiro**
  **Tsukuba-shi, Ibaraki 305-0841 (JP)**
- **ASANUMA, Yoshiaki**
  **Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **METHOD FOR PRODUCING PRODUCT OF ACETALIZATION OF ETHYLENE/VINYL ALCOHOL COPOLYMER**

(57) The present invention relates to a method for producing an acetalization product of an ethylene/vinyl alcohol copolymer by acetalization of an ethylene/vinyl alcohol copolymer, wherein the ethylene/vinyl alcohol copolymer is a porous object.

EP 4 324 798 A1

**Description**

Technical Field

The present patent application claims the Paris Convention Priority based on Japanese Patent Application No. 2021-067294 (filing date: April 12, 2021), the entirety of which is herein incorporated by reference.

The present invention relates to a method for producing an acetalization product of an ethylene/vinyl alcohol copolymer, an acetalization product, a resin sheet comprising the acetalization product as a resin component, a laminated glass interlayer comprising the resin sheet, and a laminated glass comprising the laminated glass interlayer.

Background Art

As methods for producing acetalization products of ethylene/vinyl alcohol copolymers, there are known a method involving dissolving an ethylene/vinyl alcohol copolymer in a solvent and acetalizing the copolymer in a homogeneous solution (hereinafter, also referred to as "homogeneous method") and a method involving immersing a solid ethylene/vinyl alcohol copolymer in an acetalization bath and acetalizing the copolymer in a heterogeneous system (hereinafter, also referred to as "heterogeneous method") (Patent Literature 1 and 2).

However, a homogeneous method requires a step of dissolving an ethylene/vinyl alcohol copolymer in a solvent before acetalization, and thus an acetalization product of an ethylene/vinyl alcohol copolymer is difficult to efficiently produce.

Citation List

Patent Literature

Patent Literature 1: JP H1-74201 A
Patent Literature 2: JP S53-65386 A

Summary of Invention

Technical Problem

A heterogeneous method can allow for acetalization of an ethylene/vinyl alcohol copolymer without dissolution of the ethylene/vinyl alcohol copolymer in a solvent before acetalization. However, it has been found by studies of the present inventors that acetalization according to a heterogeneous method may cause generation of a gel-like substance due to intermolecular crosslinking of an ethylene/vinyl alcohol copolymer and an acetalization product obtained is deteriorated in transparency due to such generation of a gel-like substance.

Accordingly, an object of the present invention is to provide a method for efficiently producing an acetalization product of an ethylene/vinyl alcohol copolymer, the acetalization product having excellent transparency.

Solution to Problem

The present inventors have made intensive studies in order to solve the above problems, and as a result, have reached the present invention. In other words, the present invention provides the following suitable aspects.

[1] A method for producing an acetalization product of an ethylene/vinyl alcohol copolymer by acetalization of an ethylene/vinyl alcohol copolymer, wherein the ethylene/vinyl alcohol copolymer is a porous object.

[2] The method according to [1], wherein a pore median diameter of the porous object is 0.005 $\mu$m or more.

[3] The method according to [1] or [2], wherein the porous object contains a pore in a gravity center section of the porous object.

[4] The method according to any of [1] to [3], wherein a pore surface area of the porous object is 25 $m^2/g$ or more.

[5] The method according to any of [1] to [4], wherein an ethylene content in the ethylene/vinyl alcohol copolymer is 20 to 60 mol%.

[6] The method according to any of [1] to [5], wherein an average particle diameter of the porous object is 1 mm or more.

[7] The method according to any of [1] to [6], wherein the porous object is pellet-shaped.

[8] The method according to any of [1] to [7], wherein the acetalization is performed by solid-liquid reaction.

[9] The method according to any of [1] to [8], wherein a dispersion comprising the ethylene/vinyl alcohol copolymer and a solvent is prepared, and an aldehyde and a catalyst are added in the listed order, to the dispersion, to perform acetalization.

[10] The method according to any of [9], wherein the solvent contains water.

[11] An acetalization product of an ethylene/vinyl alcohol copolymer, wherein the acetalization product is a porous object having a pore median diameter of 0.005 $\mu$m or more.

[12] A resin sheet comprising the acetalization product of an ethylene/vinyl alcohol copolymer according to [11], as a resin component.

[13] The resin sheet according to [12], wherein a storage elastic modulus at 50°C and a frequency of 1 Hz is 20 MPa or more.

[14] A laminated glass interlayer, comprising the resin sheet according to [12] or [13].

[15] A laminated glass comprising two glass plates, and the laminated glass interlayer according to [14], disposed between the two glass plates.

Advantageous Effects of Invention

According to the present invention, a method for efficiently producing an acetalization product of an ethylene/vinyl alcohol copolymer, the acetalization product having an excellent transparency, can be provided.

Description of Embodiments

[Method for producing an acetalization product of ethylene/vinyl alcohol copolymer]

The method for producing an acetalization product of an ethylene/vinyl alcohol copolymer (hereinafter, also simply referred to as "acetalization product") of the present invention includes a step of acetalizing an ethylene/vinyl alcohol copolymer (hereinafter, also referred to as "EVOH").

<Ethylene/vinyl alcohol copolymer>

In the present invention, the ethylene/vinyl alcohol copolymer used in acetalization is a porous object. The porous object of the ethylene/vinyl alcohol copolymer (hereinafter, also referred to as "EVOH porous object") is used as a raw material, and therefore an acetalization product of EVOH, which hardly causes generation of intermolecular crosslinking of EVOH and which is excellent in transparency, can be obtained even by acetalization of solid EVOH according to a heterogeneous method. The reason why such an effect is exerted is considered because an acetalization agent can permeate not only in a solid surface of EVOH, but also to a solid interior of EVOH through a pore, thereby allowing for homogeneous acetalization of EVOH, and as a result, the difference in degree of acetalization between the solid surface and the solid interior of an acetalization product obtained by acetalization is smaller and an acetalization product narrow in distribution of the degree of acetalization is obtained.

In the present invention, the EVOH porous object refers to EVOH containing a large number of pores. Some of or all the pores preferably each have an opening on a porous object surface.

In one embodiment of the present invention, the pore median diameter of the EVOH porous object is preferably 0.005 $\mu$m or more, more preferably 0.01 $\mu$m or more, further preferably 0.02 $\mu$m or more, from the viewpoint that EVOH is homogeneously acetalized and thus an acetalization product obtained of EVOH can be enhanced in transparency. The median diameter is preferably 1 $\mu$m or less, more preferably 0.5 $\mu$m or less, further preferably 0.2 $\mu$m or less, still more preferably less than 0.2 $\mu$m, especially preferably 0.18 $\mu$m or less, especially more preferably 0.15 $\mu$m or less, particularly preferably 0.12 $\mu$m or less, from the viewpoint that the porous object can retain strength and thus the porous object is hardly disintegrated and crushed in an acetalization product production step, and as a result, blocking or the like of a production line is hardly caused and an acetalization product can be produced efficiently. The pore median diameter is a median diameter (d50) of all pores having a pore diameter in a range of 0.005 to 100 $\mu$m in a Log derivative pore volume (logarithmic derivative pore volume) distribution. The reason why the pore diameter is set in a range of 0.005 to 100 $\mu$m in the pore distribution is because a pore distribution with a pore diameter of more than 100 $\mu$m is mainly due to an interparticle void and a pore distribution with a pore diameter of less than 0.005 $\mu$m around the lower limit of measurement is associated with a pseudo pore due to compression or the like.

The pore median diameter of the EVOH porous object can be adjusted by production conditions of the porous object. For example, in a case where a composition comprising EVOH and at least one solvent selected from water and alcohol is prepared, and extruded into a congelation liquid and then coagulated in a strand shape, and a strand-shaped coagulate obtained is cut to thereby produce the EVOH porous object, the median diameter of the porous object can be adjusted by, for example, the type and the content of the solvent comprised in the composition, the line velocity and the extrusion temperature in extrusion of the composition, and the cooling rate.

The pore median diameter can be measured with a pore distribution measurement apparatus, and is measured by, for example, a method described in Examples.

In one embodiment of the present invention, the EVOH porous object preferably contains a pore in a gravity center section of the porous object. The porous object contains a pore in the gravity center section, thereby enabling an acetalization agent to permeate to the solid interior of EVOH, in particular, to the gravity center section of EVOH, and thus enable EVOH to be homogeneously acetalized. As a result, intermolecular crosslinking of EVOH is hardly caused and an acetalization product obtained of EVOH can be enhanced in transparency.

In the present invention, the "containing a pore in a gravity center section of the porous object" means that, when the shortest distance in a distance from the gravity center of a porous object cross section passing through the gravity center of the porous object, to a porous object surface, is defined as the distance L, a pore is present in a region corresponding to 50% or less of the distance L from the gravity center of the cross section.

In one embodiment of the present invention, the EVOH porous object contains, in a porous object cross section passing through the gravity center of the porous object, a pore in preferably a region corresponding to 30% or less, more preferably a region corresponding to 20% or less, further preferably a region corresponding to 10% or less of a distance L from the gravity center of the cross section, under the assumption that the distance L is the shortest distance in a distance from the gravity center of the cross section to a porous object surface, from the viewpoint that EVOH is homogeneously acetalized and thus an acetalization product obtained of EVOH can be enhanced in transparency.

In one embodiment of the present invention, the total pore area in a porous object cross section passing through the gravity center of the EVOH porous object is preferably 10 area% or more, more preferably 20 area% or more, further preferably 30 area% or more with respect to the total of the cross section area, from the viewpoint that EVOH is homogeneously acetalized and thus an acetalization product obtained of EVOH can be enhanced in transparency. The total pore area may be preferably 60 area% or less, more preferably 50 area% or less with respect to the total of the cross section area, from the viewpoint that the strength of the porous object can be enhanced and as a result, the porous object is hardly disintegrated and an acetalization product can be produced efficiently in an acetalization product production step.

The porous object cross section passing through the gravity center of the EVOH porous object can be made with a single-edged razor blade or the like. The presence or absence of a pore and the proportion of the total pore area in the cross section can be confirmed and calculated by observation and analysis of an electron photomicrograph of the cross section.

In one embodiment of the present invention, the pore surface area at 0.005 to 100 $\mu$m, of the EVOH porous object, as measured by a mercury intrusion technique, is preferably 25 $m^2$/g or more, more preferably 30$m^2$/g or more from the viewpoint that an acetalization product of EVOH is easily enhanced in transparency. The pore surface area of the EVOH porous object is preferably 45$m^2$/g or less, more preferably 41$m^2$/g or less, still more preferably 39$m^2$/g or less from the viewpoint that porous EVOH can be inhibited from agglutinating during washing at a high temperature in a production process of the EVOH porous object.

The pore surface area at 0.005 to 100 $\mu$m, of the EVOH porous object, can be adjusted by production conditions of the porous object. For example, this can be adjusted by, for example, the type and the content of the solvent comprised in the composition, the line velocity and the extrusion temperature in extrusion of the composition to a congelation liquid, and the cooling rate in coagulation, as in the method for adjusting the pore median diameter of the porous object. The pore volume of the porous object can be measured with a pore distribution measurement apparatus, and can be measured by, for example, a method described in Examples.

In one embodiment of the present invention, the pore volume of the EVOH porous object may be preferably 0.1 mL/g or more, more preferably 0.2 mL/g or more, further preferably 0.25 mL/g or more, from the viewpoint that EVOH is homogeneously acetalized and thus an acetalization product obtained of EVOH can be enhanced in transparency. The pore volume may be preferably 1.0 mL/g or less, more preferably 0.5 mL/g or less, further preferably 0.3 mL/g or less, from the viewpoint of handleability.

The pore volume of the EVOH porous object can be adjusted by production conditions of the porous object. For example, this can be adjusted by, for example, the type and the content of the solvent comprised in the composition, the line velocity and the extrusion temperature in extrusion of the composition to a congelation liquid, and the cooling rate in coagulation, as in the method for adjusting the pore median diameter of the porous object. The pore volume of the porous object can be measured with a pore distribution measurement apparatus, and can be measured by for example, a method described in Examples.

In one embodiment of the present invention, the average particle diameter of the EVOH porous object may be preferably 1 mm or more, more preferably 2 mm or more, further preferably 3 mm or more from the viewpoint of handleability. The average particle diameter may be preferably 10 mm or less, more preferably 7 mm or less, further preferably 5 mm or less from the viewpoint that EVOH can be homogeneously acetalized and an acetalization product obtained can be enhanced in transparency. The average particle diameter can be measured by, for example, a method described in Examples.

The shape of the EVOH porous object is not particularly limited, and examples thereof include a powder shape, a pellet shape, a flake shape, a bead shape, and an indefinite shape. In particular, the porous object is preferably powder-shaped or pellet-shaped, more preferably pellet-shaped. The pellet-shaped porous object in the present invention means a solid-state porous object having a substantially constant size, for example, having a spherical shape, a cylindrical shape, an elliptic cylinder shape, or a polygonal shape, and the cross section thereof may have a circular shape, an elliptic shape, a polygonal shape, or the like.

In a case where the EVOH porous object of the present invention is pellet-shaped, such a pellet-shaped porous object can be produced by a method including extruding an ethylene/vinyl alcohol copolymer composition into a congelation liquid to coagulate it in a strand shape, and then cutting a strand-shaped coagulate obtained, to a predetermined length by a strand cutter or the like, or a method including directly cutting an ethylene/vinyl alcohol copolymer composition in a molten state, as described below.

Examples of the ethylene/vinyl alcohol copolymer include one obtained by copolymerizing ethylene and a vinyl ester-based monomer and saponifying a copolymer obtained. In one embodiment of the present invention, the ethylene content (hereinafter, also referred to as ethylene unit content) in the ethylene/vinyl alcohol copolymer is preferably 20 to 60 mol% with respect to the total monomer unit constituting EVOH. The ethylene content may be more preferably 20 mol% or more, further preferably 30 mol% or more, particularly preferably 35 mol% or more from the viewpoint that an acetalization product obtained can be enhanced in penetration resistance and molding processability, and may be more preferably 60 mol% or less, further preferably 55 mol% or less, particularly preferably 50 mol% or less from the viewpoint that an acetalization product obtained can be enhanced in storage elastic modulus.

The degree of saponification of EVOH is not particularly limited, and is, for example, preferably 95 mol% or more, more preferably 98 mol% or more, further preferably 99 mol% or more, particularly preferably 99.9 mol% or more from the viewpoint of resistance to thermal decomposition. The upper limit of the degree of saponification is not particularly limited, and may be, for example, 100 mol% or less.

The vinyl alcohol unit content in the ethylene/vinyl alcohol copolymer, with respect to the total monomer unit constituting EVOH, may be preferably 40 mol% or more, more preferably 45 mol% or more, further preferably 50 mol% or more from the viewpoint that an acetalization product obtained can be enhanced in storage elastic modulus, and may be preferably 80 mol% or less, more preferably 70 mol% or less, further preferably 65 mol% or less from the viewpoint that an acetalization product obtained can be enhanced in penetration resistance and molding processability.

The ethylene/vinyl alcohol copolymer is not particularly limited in terms of the copolymerization form, and may be any of a random copolymer, an alternating copolymer, a block copolymer, a graft copolymer, and the like.

In the present invention, the ethylene/vinyl alcohol copolymer may include, in addition to an ethylene unit, a vinyl alcohol unit and a vinyl ester unit, a monomer unit (hereinafter, also referred to as "other monomer unit") derived from a monomer copolymerizable with such unit(s), as long as the effects of the present invention are not impaired. Examples of such other monomer unit include $\alpha$-olefin such as propylene, isobutylene, $\alpha$-octene, or $\alpha$-dodecene; unsaturated acid such as acrylic acid, methacrylic acid, methyl methacrylate, crotonic acid, maleic acid, or itaconic acid, or anhydride, salt or mono- or di-alkyl ester thereof; nitrile such as acrylonitrile or methacrylonitrile; amide such as acrylamide or methacrylamide; olefinsulfonic acid such as ethylenesulfonic acid, allyl sulfonic acid, or methallyl sulfonic acid, or a salt thereof; alkyl vinyl ethers, vinyl ketone, N-vinylpyrrolidone, vinyl chloride, or vinylidene chloride. In a case where the ethylene/vinyl alcohol copolymer includes such other monomer unit, the content may be preferably 15 mol% or less, more preferably 10 mol% or less.

The contents of the ethylene unit, the vinyl alcohol unit and such other monomer unit optionally included in EVOH in the present invention can be determined by NMR measurement, and can be determined by, for example, a method described in Examples.

In one embodiment of the present invention, the melt flow rate (MFR) of the ethylene/vinyl alcohol copolymer, measured under conditions of 190°C and 2.16 Kg according to JIS K7210-1:2014, may be preferably 1 to 30 g/10 min, more preferably 2 to 20 g/10 min, further preferably 3 to 10 g/10 min from the viewpoint that an acetalization product obtained can be inhibited from being degraded due to heat in molding processing.

The method for producing the porous object of the ethylene/vinyl alcohol copolymer is not particularly limited, and the porous object can be produced by a known method. A method for producing a pellet-shaped EVOH porous object as one example will be described.

Such a pellet-shaped EVOH porous object can be produced by a method including a step of preparing a composition comprising an ethylene/vinyl alcohol copolymer and at least one solvent selected from water and alcohol, and a step of extruding the composition into a congelation liquid and coagulating it in a strand shape, and cutting such a coagulate, or a step of directly cutting the composition in a molten state, as described in, for example, JP H11-293077 A and JP 2002-121290 A.

EVOH comprised in the composition can be obtained by copolymerizing ethylene and a vinyl ester-based monomer, and saponifying a copolymer obtained.

Examples of the vinyl ester-based monomer as a raw material of EVOH include vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, or vinyl benzoate. In particular, vinyl acetate is preferable.

The method for copolymerizing ethylene and the vinyl ester-based monomer is not particularly limited, and the copolymerization may be made by a conventionally known method such as a solution polymerization method, a mass polymerization method, a suspension polymerization method, or an emulsion polymerization method. The polymerization initiator usable in the copolymerization can be appropriately selected from conventionally known polymerization initiators such as azo-based initiators, peroxide-based initiators, and redox-based initiators, depending on the polymerization method.

Such saponification of the copolymer of ethylene and the vinyl ester-based monomer can be performed by alcoholysis, hydrolysis or the like with a conventionally known alkali catalyst or acid catalyst, and in particular, saponification with a caustic soda (NaOH) catalyst in methanol as a solvent is preferable because of being simple.

The alcohol that can be comprised in the composition is not particularly limited as long as it is a solvent that can dissolve EVOH, and examples include methanol, ethanol, propanol, or isopropanol. Among these alcohols, an alcohol having a boiling point of 100°C or less is preferable because of having a low boiling point and being easily removed, and, in particular, methanol is preferable.

In a case where the composition comprises water as the solvent, the composition may be prepared by directly adding water to EVOH, or a composition comprising EVOH and alcohol, or may be prepared by, if necessary, concentrating an alcohol solution of EVOH, in which EVOH is dissolved in alcohol, and then adding water at a level not resulting in precipitation of EVOH in the alcohol solution of EVOH. A composition comprising EVOH and water, or EVOH, water and alcohol may also be obtained by introducing water vapor into a composition comprising EVOH or EVOH and alcohol, and discharging at least one portion of such alcohol, together with water vapor.

The alcohol usable in the alcohol solution of EVOH is not particularly limited as long as it is a solvent that can dissolve EVOH, examples thereof include the same as in the alcohol that can comprised in the composition, an alcohol having a boiling point of 100°C or less is preferable because of having a low boiling point and being easily removed, and, in particular, methanol is preferable.

The content of the alcohol in the alcohol solution of EVOH may be preferably 1 to 500 parts by mass, more preferably 5 to 200 parts by mass with respect to 100 parts by mass of EVOH.

In a case where the composition comprises water, the content of the water with respect to 100 parts by mass of EVOH is preferably 10 parts by mass or more, more preferably 30 parts by mass or more, further preferably 50 parts by mass or more from the viewpoint that EVOH can be homogeneously acetalized and from the viewpoint that a neutralized salt generated due to neutralization after acetalization reaction can be removed, and is preferably 500 parts by mass or less, more preferably 300 parts by mass or less, further preferably 200 parts by mass or less, from the viewpoint that a porous object obtained can be increased in strength and as a result, an acetalization product can be produced efficiently.

In a case where the composition comprises alcohol, the content of the alcohol with respect to 100 parts by mass of EVOH is preferably 10 parts by mass or more, more preferably 30 parts by mass or more, further preferably 50 parts by mass or more from the viewpoint that EVOH can be homogeneously acetalized and from the viewpoint that a neutralized salt generated due to neutralization after acetalization reaction can be removed, and is preferably 500 parts by mass or less, more preferably 300 parts by mass or less, further preferably 200 parts by mass or less, from the viewpoint that a porous object obtained can be increased in strength and as a result, an acetalization product can be produced efficiently.

The congelation liquid that coagulates the composition is not particularly limited as long as it is a solvent that can coagulate EVOH, and water, alcohol, or a mixed solvent of water and alcohol is preferably used as the congelation liquid.

The temperature of the congelation liquid is preferably 0 to 50°C, more preferably 0 to 30°C from the viewpoint that the composition can be sufficiently coagulated. The temperature of the composition in extrusion of the composition into the congelation liquid is preferably 90 to 150°C, more preferably 100 to 140°C from the viewpoint of fluidity of EVOH.

The composition is extruded into the congelation liquid and then coagulated as described above, and thus a congealed object obtained is a porous object with pores orientated.

A strand-shaped congealed object obtained may be cut by, for example, a strand cutter, and a strand-shaped coagulate obtained can be cut by, for example, a strand cutter, to thereby provide a pellet-shaped EVOH porous object.

Examples of the method for obtaining the pellet-shaped EVOH porous object by direct cutting of the composition in a molten state include a method for obtaining the pellet-shaped EVOH porous object by hot cutting, hot cutting in water, or the like of a molten product of the composition, from an extruder.

The molten product of the composition is extruded and pelletized as described above, and thus a pellet obtained is a porous object with pores oriented.

A method for producing a powder-shaped EVOH porous object is not particularly limited, and such a porous object may be obtained by, for example, pulverizing the pellet-shaped porous object obtained by the above method, with a pulverizer or the like.

The EVOH porous object may include a solvent or may include no solvent, and, in a case where the solvent included is a good solvent for EVOH, the amount of the good solvent in EVOH is preferably reduced by drying or the like to such an extent that no pore of the EVOH porous object is clogged. In a case where the solvent included is a poor solvent for EVOH, such as water, the EVOH porous object may include such a poor solvent such as water in an amount of 5 parts by mass to 200 parts by mass with respect to 100 parts by mass of the EVOH porous object.

<Acetalization>

In the present invention, EVOH used as a raw material is a porous object, and thus an acetalization product of EVOH, which hardly causes generation of intermolecular crosslinking of EVOH and which is excellent in transparency, can be obtained even by acetalization in a heterogeneous system. Accordingly, in the present invention, no step of dissolving EVOH in a solvent before acetalization is required, and thus an acetalization product of EVOH can be efficiently produced.

The acetalization in the present invention can be performed by dispersing a solid-state EVOH porous object in a solvent, and adding an acetalization agent to an EVOH dispersion obtained.

The acetalization in the present invention may be performed by solid-liquid reaction or dissolution reaction.

In the present invention, the method for performing the acetalization by solid-liquid reaction (hereinafter, also referred to as "solid-liquid method") refers to a method where a poor solvent for EVOH and for an acetalization product of EVOH, produced by the acetalization, is used as a solvent of acetalization reaction, to thereby obtain an acetalization product generated, as a solid dispersed in a dispersion, without dissolution of EVOH and the acetalization product in a solvent in an acetalization step.

The solvent of acetalization reaction, usable in the solid-liquid method, is a poor solvent for EVOH and its acetalization product, and is preferably a solvent containing water, more preferably water.

The method for performing the acetalization by dissolution reaction (hereinafter, also referred to as "dissolution method") refers to a method where a solvent that is a poor solvent for EVOH and a good solvent for an acetalization product generated by the acetalization is used as the solvent of acetalization reaction, to thereby dissolve an acetalization product generated according to progression of reaction in an acetalization step, in the solvent, and then obtain a solution where the acetalization product generated is dissolved in the solvent, after the acetalization step.

The solvent of acetalization reaction, usable in the dissolution method, is a poor solvent for EVOH and is a good solvent for the acetalization product of EVOH. Examples of the solvent include alcohol, and a mixed solvent of alcohol and water. The alcohol is preferably an alcohol having a boiling point of 120°C or less, such as methanol, ethanol, propanol, isopropanol, butanol, or isobutyl alcohol, and in particular, more preferably methanol from the viewpoint of low solubility of EVOH and easy drying. In a case where a mixed solvent of alcohol and water is used as the solvent of acetalization reaction, the ratio (alcohol: water (volume ratio)) in the mixed solvent is preferably 99.9:0.1 to 85:15, more preferably 97:3 to 87:13.

In a case where water is used as the solvent of acetalization reaction, water is a poor solvent for EVOH and the acetalization product of EVOH, and thus such a method is classified as the solid-liquid method. In this regard, in a case where methanol is used as the solvent of acetalization reaction, such a method is classified as the dissolution method because methanol can be a good solvent for the acetalization product of EVOH depending on the degree of acetalization, although can be a poor solvent for EVOH at a low temperature (for example, 60°C or less).

In one embodiment of the present invention, the acetalization is preferably performed by solid-liquid reaction. The acetalization is performed by solid-liquid reaction, thus an acetalization product generated can be separated from the reaction liquid by filtering operation, the acetalization product can be produced efficiently and the acetalization product can be produced at a high yield.

In one embodiment of the present invention, the content of EVOH comprised in the EVOH dispersion is preferably 5 mass% or more, more preferably 10 mass% or more, further preferably 15 mass% or more, and preferably 70 mass% or less, more preferably 60 mass% or less, further preferably 50 mass% or less, with respect to the total mass of the dispersion.

The acetalization agent is, for example, aldehyde. The aldehyde usable in the acetalization is not particularly limited, and examples thereof include formaldehyde, acetaldehyde, propionaldehyde, butylaldehyde, hexylaldehyde, benzaldehyde, isobutylaldehyde, 2-ethylhexylaldehyde, 2-methylbutylaldehyde, trimethyl acetaldehyde, 2-methylpentylaldehyde, 2,2-dimethylbutylaldehyde, 2-ethyl butyl aldehyde, or 3,5,5-trimethylhexylaldehyde. These aldehydes may be used singly or in combination of two or more kinds thereof.

In one embodiment of the present invention, the aldehyde is preferably butylaldehyde, benzaldehyde, or isobutylaldehyde from the viewpoint that an acetalization product obtained can be enhanced in heat resistance and/or transparency. In one embodiment of the present invention, the aldehyde is preferably one having no carboxyl group from the viewpoint that an acetalization product obtained can be enhanced in transparency.

The amount of the aldehyde added to the EVOH dispersion is not particularly limited, and may be appropriately adjusted depending on the desired degree of acetalization. In one embodiment of the present invention, the amount of the aldehyde added may be preferably 1 to 40 parts by mass, more preferably 5 to 35 parts by mass, further preferably 10 to 30 parts by mass with respect to 100 parts by mass of EVOH, from the viewpoint that an acetalization product obtained can be enhanced in transparency and impact resistance.

In one embodiment of the present invention, the acetalization is preferably performed in the presence of a catalyst, in particular, an acidic catalyst. The acidic catalyst is not particularly limited and may be an organic acid or an inorganic acid. Examples of the acidic catalyst include acetic acid, para-toluenesulfonic acid, nitric acid, sulfuric acid, hydrochloric acid, phosphoric acid, or carbonic acid. Among these catalysts, an inorganic acid such as hydrochloric acid, sulfuric acid, or nitric acid is preferable from the viewpoint that the reaction rate of acetalization reaction can be increased, that washing off from an acetalization product generated is easy, and that the acetalization product can be produced efficiently.

The amount of the catalyst added to the EVOH dispersion can be appropriately selected depending on the type of the catalyst and the reaction temperature, and the concentration of the catalyst in the dispersion may be, for example, preferably 0.001 to 1.0 mol/L, more preferably 0.01 to 0.8 mol/L, further preferably 0.05 to 0.5 mol/L.

The method for adding the catalyst to the EVOH dispersion is not particularly limited, and, for example, the catalyst may be added to the EVOH dispersion at one time or in multiple portions. The catalyst is preferably added to the EVOH dispersion in multiple portions, in particular, preferably in two portions, from the viewpoint that an acetalization product small in haze and excellent in transparency can be obtained.

In a case where the catalyst is added to the EVOH dispersion in multiple portions, the amount of the first addition of the catalyst is preferably 50 mass% or less, more preferably 40 mass% or less, further preferably 30 mass% or less, with respect to the total amount of addition. When the amount of the first addition of the catalyst is equal to or less than the upper limit, the distribution of the degree of acetalization is narrow and an acetalization product obtained can be enhanced in transparency.

In one preferable embodiment of the present invention, the acetalization is performed by preparing a dispersion comprising EVOH and a solvent, and adding the aldehyde and the catalyst to the dispersion preferably in the listed order. The aldehyde and the catalyst are added to the dispersion in the listed order, and thus the aldehyde homogeneously permeates to EVOH to thereby enable homogeneous acetalization of EVOH and thus can enhance transparency of an acetalization product obtained.

In one preferable embodiment of the present invention, the acetalization is preferably performed by adding the aldehyde to the dispersion comprising EVOH and a solvent, and then adding the catalyst in multiple portions.

The reaction temperature of the acetalization is preferably equal to or less than the glass transition temperature of EVOH from the viewpoint that a pore in the EVOH porous object can be retained. The reaction temperature may be more preferably 10 to 70°C, more preferably 30 to 60°C. The acetalization may be performed in air or in an inert gas such as a nitrogen gas or an argon gas, and may be performed under any of ordinary pressure, pressure, or reduced pressure.

After acetalization reaction, a reaction liquid obtained may be, if necessary, neutralized with alkali, and thereafter the acetalization product may be separated and purified from the reaction liquid by a common method, for example, a separation procedure such as filtration, concentration, re-precipitation, or re-crystallization. A neutralized salt generated by such neutralization is preferably removed by washing or the like. The alkali usable in such neutralization is not particularly limited, and examples thereof include sodium hydroxide, potassium hydroxide, ammonia, sodium acetate, sodium carbonate, sodium hydrogen carbonate, or potassium carbonate.

[Acetalization product of EVOH]

An acetalization product of EVOH, obtained by the method of the present invention, has excellent transparency because of being homogeneously acetalized and hardly having intermolecular crosslinking of EVOH.

The ethylene unit content in the acetalization product may be preferably 20 to 60 mol% with respect to the total monomer unit constituting the acetalization product. The ethylene content may be more preferably 20 mol% or more, further preferably 30 mol% or more, particularly preferably 35 mol% or more from the viewpoint that penetration resistance and molding processability can be enhanced, and may be more preferably 60 mol% or less, further preferably 55 mol% or less, particularly preferably 50 mol% or less from the viewpoint that storage elastic modulus is enhanced and self-supporting ability of a resin sheet comprising the acetalization product as a resin component can be increased.

The vinyl alcohol unit content in the acetalization product, with respect to the total monomer unit constituting the acetalization product, may be preferably 12 mol% or more, more preferably 16 mol% or more, further preferably 18 mol% or more, still more preferably 20 mol% or more, particularly preferably 22 mol% or more from the viewpoint that adhesiveness to a substrate such as glass can be increased, and may be preferably 79 mol% or less, more preferably 77 mol% or less, further preferably 76 mol% or less, still more preferably 72 mol% or less, particularly preferably 68 mol% or less from the viewpoint that the acetalization product obtained can be increased in transparency.

The content of an acetal unit (vinyl alcohol unit acetalized) in the acetalization product may be preferably 1 mol% or more, more preferably 3 mol% or more, further preferably 5 mol% or more, still more preferably 10 mol% or more, particularly preferably 15 mol% or more from the viewpoint that the acetalization product has a crystallinity kept low and can be increased in transparency, and may be preferably 70 mol% or less, more preferably 60 mol% or less, further preferably 55 mol% or less, still more preferably 50 mol% or less, particularly preferably 45 mol% or less from the viewpoint that heat resistance, storage elastic modulus, and adhesiveness to a substrate such as glass can be increased.

The acetalization product may comprise other monomer unit, in addition to an ethylene unit, a vinyl alcohol unit and an acetal unit (vinyl alcohol unit acetalized), and a vinyl ester unit optionally included, as long as the effects of the present invention are not impaired. Examples of such other monomer unit include the same monomer unit as other monomer unit optionally included in EVOH. In a case where the acetalization product comprises such other monomer unit, the content may be preferably 15 mol% or less, more preferably 10 mol% or less.

The content of each monomer unit in the acetalization product can be determined by NMR measurement, and can be determined by, for example, a method described in Examples.

The degree of acetalization of the acetalization product may be preferably 0.4 mol% or more, more preferably 1.2 mol% or more, further preferably 2 mol% or more, still more preferably 4 mol% or more, particularly preferably 6 mol% or more, in particular, more preferably 8 mol% or more, in particular, further preferably 10 mol% or more from the viewpoint that the acetalization product has a crystallinity kept low and can be increased in transparency, and may be preferably 56 mol% or less, more preferably 48 mol% or less, further preferably 44 mol% or less, still more preferably 40 mol% or less, particularly preferably 36 mol% or less from the viewpoint that heat resistance, storage elastic modulus, and adhesiveness to a substrate such as glass can be increased.

The degree of acetalization in the present invention refers to the proportion of the acetal unit relative to the total content of the acetal unit, the vinyl alcohol unit, and the vinyl ester unit such as a vinyl acetate unit in the acetalization product. Specifically, the degree of acetalization in the present invention can be determined by the following expression:

$$\text{Degree of acetalization (mol\%)} = \{k/(k + l + m)\} \times 100$$

under the assumption that the acetal unit content is k, the vinyl alcohol unit content is l and the vinyl ester unit content is m.

In one embodiment of the present invention, the acetalization product has high transparency, and the haze of the acetalization product is preferably 5% or less, more preferably 3% or less, further preferably 2% or less, particularly preferably 1% or less. As the haze is smaller, the acetalization product is increased in transparency, and thus the lower limit is not particularly limited and may be, for example, 0.01% or more. The haze of the acetalization product can be measured with a haze meter according to JIS K7136:2000, and can be measured by, for example, a method described in Examples.

In one embodiment of the present invention, the acetalization product is also excellent in transparency after heating to 140°C and then slow cooling from 140°C to 23°C at a rate of 0.1°C/min (transparency in slow cooling). The transparency in slow cooling can be evaluated by the haze during slow cooling (haze in slow cooling). The haze in slow cooling of the acetalization product is preferably 5% or less, more preferably 4% or less, further preferably 3% or less, still more preferably 2% or less, particularly preferably 1% or less. As the haze is smaller, the resin sheet is increased in transparency, and thus the lower limit is not particularly limited and may be, for example, 0.01% or more. The haze in slow cooling of the acetalization product is determined by producing a laminated glass comprising a resin sheet obtained from the acetalization product, as an intermediate film, and measuring the haze after the laminated glass is heated to 140°C and then slow cooled from 140°C to 23°C at a rate of 0.1°C/min, with a haze meter according to JIS K7136:2000, and can be determined by, for example, a method described in Examples.

In one embodiment of the present invention, the amount of heat of crystal fusion (ΔH) of the acetalization product may be preferably 50 J/g or less, more preferably 40 J/g or less, further preferably 30 J/g or less from the viewpoint of transparency, and the lower limit of the amount of heat of crystal fusion is not particularly limited and may be 0 J/g or more. In one embodiment of the present invention, the amount of heat of crystal fusion (ΔH) of the acetalization product may be preferably 1 J/g or more, more preferably 5 J/g or more, further preferably 10 J/g or more from the viewpoint that self-supporting ability under a high-temperature environment can be enhanced. The amount of heat of crystal fusion can be measured with a differential scanning calorimeter, by heating a sample from 25°C to 230°C at a rate of temperature rise of 10°C/min to melt the sample, cooling the sample from 230°C to -30°C at a rate of temperature drop of 10°C/min, and then raising the temperature from -30°C to 230°C at a rate of temperature rise of 10°C/min.

In one embodiment of the present invention, the melt flow rate (MFR) of the acetalization product, measured under conditions of 190°C and 2.16 Kg according to JIS K7210-1:2014, may be preferably 0.1 to 100 g/10 min, more preferably 1 to 50 g/10 min, further preferably 2 to 30 g/10 min, particularly preferably 3 to 20 g/10 min. When the MFR of the acetalization product is equal to or more than the lower limit, molding processability (fluidity) in an appropriate molding temperature range (for example, 150 to 220°C) can be enhanced, and as a result, the molding temperature is not required to be excessively increased and a molded body less colored can be obtained. When the MFR is equal to or less than the upper limit, strength and impact resistance can be increased.

In one embodiment of the present invention, the glass transition temperature (Tg) of the acetalization product is preferably 40°C or more, more preferably 45°C or more, further preferably 50°C or more in terms of the balance between heat resistance and molding processability, and may be preferably 100°C or less, more preferably 90°C or less, further preferably 80°C or less in terms of the balance between heat resistance and molding processability. The Tg is an intermediate glass transition temperature determined from a DSC curve. The DSC curve is obtained with differential scanning calorimetry at the second temperature rise when a measurement object resin is heated to 230°C at a rate of temperature rise of 10°C/min, then cooled from 230°C to -30°C at a rate of temperature drop of 10°C/min, and then again heated from -30°C to 230°C at a rate of temperature rise of 10°C/min, with a differential scanning calorimeter according to JIS K7121:2012.

In one embodiment of the present invention, the storage elastic modulus (E') at 50°C and a frequency of 1 Hz of the acetalization product, measured by dynamic viscoelasticity measurement, may be preferably 20 MPa or more, more preferably 30 MPa or more, further preferably 60 MPa or more, still more preferably 100 MPa or more from the viewpoint that self-supporting ability can be enhanced, and may be preferably 1500 MPa or less, more preferably 1200 MPa or less, further preferably 900 MPa or less from the viewpoint that penetration resistance can be increased. The storage elastic modulus can be measured with a dynamic viscoelasticity measurement apparatus by, for example, a method described in Examples.

In one embodiment of the present invention, the penetration energy of the acetalization product may be preferably 10J or more, more preferably 12J or more, further preferably 14J or more from the viewpoint of penetration resistance. The penetration energy can be calculated from the area of an SS curve from the moment of contact of a striker tip with a test piece (sensing of a test force) until penetration of the striker tip (returning of the test force to zero) during test piece penetration in a test performed under conditions of a measurement temperature of 23°C, a load of 2 kg, and an impact rate of 9 m/sec with a dropping weight type impact testing machine according to ASTM D3763, in which the test piece is a sheet having a thickness of 0.8 mm, obtained by compression molding a melt-kneaded product of the acetalization product at 200°C and at a pressure 50 kgf/cm$^2$ (50 MPa) for 5 minutes.

In one embodiment of the present invention, the acetalization product is preferably a porous object, more preferably a porous object having a pore median diameter of 0.005 μm or more. Accordingly, the present invention also encompasses an acetalization product of EVOH, which is a porous object having a pore median diameter of 0.005 μm or more.

In one embodiment of the present invention, the porous object of the acetalization product preferably has the same pore structure as in the EVOH porous object as a raw material of the acetalization product, and the pore median diameter of the porous object of the acetalization product, the presence or absence of a pore in a gravity center section of the porous object, and the total pore area, the pore surface area and the pore volume in a porous object cross section passing through the gravity center of the porous object again apply to the respective descriptions with respect to the corresponding pore structure of the EVOH porous object.

In one embodiment of the present invention, the average particle diameter and the shape of the porous object of the acetalization product, also encompassing preferred modes thereof, again apply to the respective descriptions with respect to the average particle diameter and the shape of the EVOH porous object.

The acetalization product of EVOH, obtained by the method of the present invention, is not particularly limited in terms of application, and is used as, for example, a packaging material in various fields. Such a packaging material is used, for example, as a container excellent in oxygen barrier properties, in the form of a bag, a tube, a cup, a pouch, or the like for applications of foods, cosmetics, pharmaceutical products, toiletries, vacuum insulation plates, and the like, or as a gas barrier film for a food packaging application, a petrol tank application, a vacuum insulation plate application, a heat pipe, and the like. The acetalization product of EVOH of the present invention is also useful for, for example, a fiber sizing agent, a fiber treatment agent, a fiber processing agent, a sizing agent for fiber products, a clear coating agent of paper, a pigment coating agent of paper, an internal sizing agent of paper, a paper processing agent such as a binder for overcoating of heat-sensitive paper, a pressure-sensitive adhesive, an antifogging agent, paint, a dispersant for organic and inorganic pigments, a polymerization dispersion stabilizer for emulsions, a polymerization dispersion stabilizer for vinyl chloride, an adhesive for paper, wood, plastics, and the like, a binder for unwoven cloths, a binder for fibers, a binder for ceramics, a binder for electrodes, a binder for various building materials such as gypsum boards or fiberboards, an additive for cement or mortar, a hot-melt adhesive, a resin for 3D printers, an additive for films of displays, an interlayer adhesive for ceramic stacked bodies, an adhesive composition such as liquid glue or solid glue, a separator for storage batteries, a laminate with a fluororesin, a laminate with rubber or the like, such as a tire inner liner, or a composite laminate with a fiber substrate. The acetalization product of EVOH of the present invention is high in transparency, and thus also useful as a laminated glass interlayer, a film for agriculture greenhouses, a laminate with a transparent resin such as resin grazing for vehicles, a laminate with an antenna circuit board, a protective film of a glass surface, or any of various transparent containers in cosmetic applications.

[Resin composition]

A resin composition may be obtained by adding, if necessary, other thermoplastic resin and an additive to the acetalization product of EVOH. The resin composition comprises the acetalization product, and optionally other thermoplastic resin and an additive.

The content of the acetalization product in the resin composition may be preferably 70 mass% or more, more preferably 80 mass% or more, further preferably 90 mass% or more, or may be 100 mass% or less, with respect to the total mass of the resin component, from the viewpoint of transparency.

Other thermoplastic resin optionally included is not particularly restricted, and examples thereof include a polyolefin resin such as polyethylene, polypropylene, polybutene-1, poly-4-methylpentene-1, or polynorbornene; an ethylene-based ionomer; a styrene-based resin such as polystyrene, a styrene-maleic anhydride copolymer, high-impact polystyrene, an AS resin, an ABS resin, an AES resin, an AAS resin, an ACS resin, or a MBS resin; a methyl methacrylate-based polymer, a methyl methacrylate-styrene copolymer; a polyester resin such as polyethylene terephthalate, or polybutylene terephthalate; polyamide such as nylon 6, nylon 66, or a polyamide elastomer; polycarbonate, polyvinyl chloride, polyvinylidene chloride, polyvinyl alcohol, an ethylene/vinyl alcohol copolymer, polyacetal, polyvinylidene fluoride, polyurethane, modified polyphenylene ether, polyphenylene sulfide, a silicone-modified resin, acrylic rubber, an acrylic thermoplastic elastomer, or silicone rubber; a styrene-based thermoplastic elastomer such as SEPS, SEBS, or SIS; and olefinic rubber such as IR, EPR, or EPDM. These may be adopted singly or in combination of two or more kinds thereof.

In a case where the resin composition comprises such other thermoplastic resin, the content of such other thermoplastic resin can be can be appropriately selected as long as the effects of the present invention are not impaired, and the total content of such other thermoplastic resin may be preferably 20 mass% or less, more preferably 15 mass% or less, further preferably 10 mass% or less with respect to the total mass of the resin component from the viewpoint that transparency and impact resistance can be enhanced.

Examples of the additive optionally comprised include an additive such as a plasticizer, antioxidant, an ultraviolet absorber, a light stabilizer, an adhesive modifier, an adhesive enhancer, a blocking prevention agent, a pigment, a dye, or a functional inorganic compound. Among these additives, a plasticizer, an antioxidant, an ultraviolet absorber, an adhesive modifier, or an adhesive enhancer is preferable. These additives may be adopted singly or in combination of two or more kinds thereof.

In a case where the resin composition comprises the additive, the content may be preferably 30 mass% or less, more preferably 20 mass% or less, further preferably 10 mass% or less, particularly preferably 5 mass% or less with respect to the total mass of the resin component from the viewpoint that heat resistance, in particular, self-supporting ability or the like under a high-temperature environment can be enhanced and from the viewpoint that bleedout of the additive can be suppressed.

Examples of the plasticizer include triethylene glycol-di-2-ethylhexanoate, tetraethylene glycol-di-2-ethylhexanoate, di-(2-butoxyethyl)-adipic acid ester (DBEA), di-(2-butoxyethyl)-sebacic acid ester (DBES), di-(2-butoxyethyl)-azelaic acid ester, di-(2-butoxyethyl)-glutaric acid ester, di-(2-butoxyethoxyethyl)-adipic acid ester (DBEEA), di-(2-butoxyethoxyethyl)-sebacic acid ester (DBEES), di-(2-butoxyethoxyethyl)-azelaic acid ester, di-(2-butoxyethoxyethyl)-glutaric acid ester, di-(2-hexoxyethyl)-adipic acid ester, di-(2-hexoxyethyl)-sebacic acid ester, di-(2-hexoxyethyl)-azelaic acid ester, di-(2-hexoxyethyl)-glutaric acid ester, di-(2-hexoxyethoxyethyl)-adipic acid ester, di-(2-hexoxyethoxyethyl)-sebacic acid ester, di-(2-hexoxyethoxyethyl)-azelaic acid ester, di-(2-hexoxyethoxyethyl)-glutaric acid ester, di-(2-butoxyethyl)-phthalic acid ester and/or di-(2-butoxyethoxyethyl)-phthalic acid ester. Among these plasticizers, preferred is a plasticizer where the sum of the numbers of carbon atoms and oxygen atoms constituting the molecule is 28 or more. Examples of such a plasticizer include triethylene glycol-di-2-ethylhexanoate, tetraethylene glycol-di-2-ethylhexanoate, di-(2-butoxyethoxyethyl)-adipic acid ester, or di-(2-butoxyethoxyethyl)-sebacic acid ester. These plasticizers may be adopted singly or in combination of two or more kinds thereof.

In a case where the resin composition comprises the plasticizer, the content is preferably 40 parts by mass or less, more preferably 30 parts by mass or less, further preferably 20 parts by mass or less, particularly preferably 15 parts by mass or less based on 100 parts by mass of the acetalization product from the viewpoint that heat resistance, in particular, self-supporting ability or the like under a high-temperature environment can be enhanced. The content of the plasticizer may be preferably 0 parts by mass or more, more preferably 3 parts by mass or more, further preferably 5 parts by mass or more.

Examples of the antioxidant include a phenol-based antioxidant, a phosphorus-based antioxidant, or a sulfur-based antioxidant, and in particular, a phenol-based antioxidant is preferable and an alkyl-substituted phenol-based antioxidant is more preferable. These antioxidants may be adopted singly or in combination of two or more kinds thereof.

Examples of the phenol-based antioxidant include an acrylate-based compound such as 2-t-butyl-6-(3-t-butyl-2-hydroxy-5-methylbenzyl)-4-methylphenyl acrylate or 2,4-di-t-amyl-6- (1-(3,5-di-t-amyl-2-hydroxyphenyl)ethyl)phenyl acrylate, an alkyl-substituted phenol-based compound such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), ethylenebis(oxyethylene)bis(3- (5-t-butyl-4-hydroxy-m-tolyl)propionate, 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3', 5'-di-t-butyl-4'-hydroxyphenyl)propionate)methane triethylene glycol bis(3-(3-t-butyl-4-hydroxy-5-methylphenyl)propionate), or hexamethylenebis(3-(3,5-di-t-butyl-4-hydroxyphenyl)propionate, or a triazine group-containing phenol-based compound such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine or 6-(4-hydroxy-3-methyl-5-t-butylanilino)-2,4-bis-octylthio-1,3,5-triazine or 2-octylthio-4,6-bis-(3,5-di-t-butyl-4-oxyanilino)-1,3,5-triazine.

Examples of the phosphorus-based antioxidant include a monophosphite-based compound such as triphenyl phosphite, diphenylisodecyl phosphite, phenyldiisodecyl phosphite, tris(nonylphenyl)phosphite, tris(dinonylphenyl)phosphite, tris(2-t-butyl-4-methylphenyl)phosphite, tris(cyclohexylphenyl)phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide or 10-desiloxy-9,10-dihydro-9-oxa-10-phosphaphenanthrene, or a diphosphite-based compound such as 4,4'-butylidene-bis(3-methyl-6-t-butylphenyl-di-tridecyl phosphite), 4,4'-isopropylidene-bis(phenyl-di-alkyl(C12 to C15)phosphite), 4,4'-isopropylidene-bis(diphenylmonoalkyl(C12 to C15)phosphite), 1,1,3-tris(2-methyl-4-di-tridecyl phosphite-5-t-butylphenyl)butane or tetrakis(2,4-di-t-butylphenyl)-4,4'-biphenylene phosphite. In particular, a monophosphite-based compound is preferable.

Examples of the sulfur-based antioxidant include dilauryl 3,3'-thiodipropionate, distearyl 3,3'-thiodipropionate, lauryl stearyl 3,3'-thiodipropionate, pentaerythritol-tetrakis-(β-lauryl -thiopropionate), or 3,9-bis(2-dodecylthioethyl)-2,4,8,10-tetraoxaspiro[5,5]undecane.

In a case where the resin composition comprises the antioxidant, the content is preferably 0.001 to 5 parts by mass, more preferably 0.01 to 1 part by mass based on 100 parts by mass of the acetalization product.

Examples of the ultraviolet absorber include a benzotriazole-based ultraviolet absorber such as 2- (5-methyl-2-hydroxyphenyl)benzotriazole, 2-[2-hydroxy-3,5-bis(α,α'dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole or 2-(2-hydroxy-5-t-octylphenyl)benzotriazole, or a benzoate-based ultraviolet absorber such as 2,4-di-t-butylphenyl-3,5-di-t-butyl-4-hydroxybenzoate or hexadecyl-3,5-di-t-butyl-4-hydroxybenzoate.

In a case where the resin composition comprises the ultraviolet absorber, the content may be preferably 10 to 50000 ppm, more preferably 100 to 10000 ppm on a mass basis relative to the acetalization product.

Examples of the light stabilizer include a hindered amine-based compound such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine, or bis(2,2,6,6-tetramethyl-1-(octyloxy)-4-piperidine) sebacate.

The adhesive modifier is an additive that reduces adhesion force. Examples of the adhesive modifier include an adhesive modifier disclosed in WO 03/033583, preferably includes an alkali metal salt and/or an alkali earth metal salt of an organic acid. Examples more preferably include a potassium salt or a magnesium salt of a carboxylic acid having 1 to 16 carbon atoms, such as potassium acetate, magnesium acetate, magnesium propionate, magnesium butyrate, magnesium 2-ethylbutyrate, magnesium 2-ethylhexanoate, magnesium octylate, magnesium decanoate, or magnesium neodecanoate.

Examples of the adhesive enhancer include a silane coupling agent. Examples of the silane coupling agent include 3-glycidoxypropyltrimethoxysilane, 3-glycidoxypropyldiethoxysilane, N-(2-aminoethyl)-3-aminopropyltrimethoxysilane, or N-(2-aminoethyl)-3-aminopropyldiethoxysilane. These silane coupling agents may be adopted singly or in combination of two or more kinds thereof.

In a case where the resin composition comprises the adhesive modifier or the adhesive enhancer, the content may be appropriately selected depending on the type of the adhesive improver and the environment where, in a case where the resin composition is used as a raw material of a laminated glass interlayer, the laminated glass is used. For example, the content of the adhesive improver is preferably adjusted so that the adhesion force of glass to a resin sheet obtained is generally 3 to 10 in a Pummel test (described in WO 03/033583), in particular, preferably 3 to 6 in a case where high penetration resistance is required, preferably 7 to 10 in a case where high glass shatterproof properties are required. In a case where high glass shatterproof properties are demanded, no addition of any adhesive enhancer is also a useful method.

In a case where the resin composition comprises the adhesive enhancer, the content may be preferably 0.001 to 5 parts by mass, more preferably 0.01 to 1 part by mass based on 100 parts by mass of the acetalization product of EVOH.

Such various additives may be added during production of the acetalization product of EVOH or may be added after production of the acetalization product of EVOH.

[Resin sheet]

The present invention also encompasses a resin sheet comprising the acetalization product of EVOH of the present invention, as a resin component. In one embodiment of the present invention, the resin sheet of the present invention has one or more layers each comprising the acetalization product of EVOH of the present invention as a resin component (hereinafter, also referred to as layer (x)). The layer (x) is a layer made of the resin composition of the present invention, comprising the acetalization product of the present invention and optionally other thermoplastic resin and an additive.

The resin sheet may be composed of only the layer (x), or may be a laminate comprising at least one such layer (x). The laminate is not particularly limited, and examples thereof include a laminate comprising two or more such layers (x), and a laminate comprising one or more such layers (x) and one or more other layers. In a case where such a layer (x) or other layer includes a plurality of layers, the respective resins or resin compositions constituting such layers may be the same or different.

Examples of such other layer include a layer comprising a known resin. The resin here used can be polyethylene, polypropylene, polyvinyl chloride, polystyrene, polyurethane, polytetrafluoroethylene, an acrylic resin, polyamide, polyacetal, polycarbonate, polyethylene terephthalate or polybutylene terephthalate in polyester, cyclic polyolefin, polyphenylene sulfide, polytetrachloroethylene, polysulfone, polyethersulfone, polyarylate, a liquid crystal polymer, polyimide, a thermoplastic elastomer, or the like. Such other layer may also comprise, if necessary, one or more additives, for example, the additive, and/or a heat shield material (for example, an inorganic heat-shielding fine particle or an organic heat-shielding material having infrared absorption ability).

In one embodiment of the present invention, the resin sheet of the present invention preferably has a concave-convex structure on its surface from the viewpoint of preventing adhesion between the resin sheets and from the viewpoint of an increase in degassing ability in a lamination step. Examples of the method for providing the concave-convex structure include a conventionally known method, and examples thereof include a method including providing a melt fracture structure by adjustment of extrusion conditions, or a method including providing an embossed structure on an extruded sheet. The depth and shape of embossment may be those conventionally known.

The thickness of such one layer (x) in the resin sheet is preferably 0.01 mm or more, more preferably 0.05 mm or more, further preferably 0.10 mm or more, and preferably 3 mm or less, more preferably 2.5 mm or less, further preferably 2 mm or less, still more preferably 1.5 mm or less, particularly preferably 1 mm or less. In a case where a plurality of such layers (x) is present in the resin sheet, the respective thickness of such layers (x) in the resin sheet may be the same or different.

The thickness of the resin sheet is preferably 0.1 mm or more, more preferably 0.4 mm or more, further preferably 0.7 mm or more from the viewpoint that penetration resistance can be increased, and is preferably 3 mm or less, more preferably 2.5 mm or less, further preferably 2 mm or less, still more preferably 1.5 mm or less, particularly preferably 1 mm or less from the viewpoint that handling is easy. The thickness of the resin sheet is measured by a conventionally known method, for example, with a contact or non-contact thickness meter.

In one embodiment of the present invention, the haze of the resin sheet of the present invention is preferably 5% or less, more preferably 3% or less, further preferably 2% or less, particularly preferably 1% or less. As the haze is smaller, the resin sheet is increased in transparency, and thus the lower limit is not particularly limited and may be, for example, 0.01%. The haze of the resin sheet can be measured with a haze meter according to JIS K7136:2000, and can be measured by, for example, a method described in Examples.

The resin sheet of the present invention is also excellent in transparency after heating to 140°C and then slow cooling from 140°C to 23°C at a rate of 0.1°C/min (transparency in slow cooling). The transparency in slow cooling can be evaluated by the haze during slow cooling (haze in slow cooling). The haze in slow cooling of the resin sheet of the present invention is preferably 5% or less, more preferably 4% or less, further preferably 3% or less, still more preferably 2% or less, particularly preferably 1% or less. As the haze is smaller, the resin sheet is increased in transparency, and thus the lower limit is not particularly limited and may be, for example, 0.01% or more. The haze in slow cooling of the resin sheet is determined by producing a laminated glass comprising the resin sheet as an intermediate film, and measuring the haze after the laminated glass is heated to 140°C and then slow cooled from 140°C to 23°C at a rate of 0.1°C/min, with a haze meter according to JIS K7136:2000, and can be determined by, for example, a method described in Examples.

In one embodiment of the present invention, the storage elastic modulus (E') at 50°C and a frequency of 1 Hz of the resin sheet of the present invention, measured by dynamic viscoelasticity measurement, may be preferably 20 MPa or more, more preferably 30 MPa or more, further preferably 60 MPa or more, still more preferably 100 MPa or more from the viewpoint of favorable self-supporting ability, and preferably 1500 MPa or less, more preferably 1200 MPa or less, further preferably 900 MPa or less from the viewpoint that penetration resistance can be increased. The storage elastic modulus can be measured with a dynamic viscoelasticity measurement apparatus by, for example, a method described in Examples.

In one embodiment of the present invention, the penetration energy of the resin sheet of the present invention may be preferably 10J or more, more preferably 12J or more, further preferably 14J or more from the viewpoint of penetration resistance. The penetration energy can be calculated from the area of an SS curve from the moment of contact of a striker tip with a test piece (sensing of a test force) until penetration of the striker tip (returning of the test force to zero) during test piece penetration in a test performed under conditions of a measurement temperature of 23°C, a load of 2 kg, and an impact rate of 9 m/sec with a dropping weight type impact testing machine according to ASTM D3763, in which the test piece is a sheet having, for example, a thickness of 0.8 mm, obtained by compression molding a melt-kneaded product of the acetalization product at 200°C and at a pressure 50 kgf/cm$^2$ (50 MPa) for 5 minutes.

The resin sheet is preferably lower in water content from the viewpoint of hardly foaming in production of laminated glass and from the viewpoint of being hardly reduced in adhesion force to a substrate. The water content of the resin sheet is preferably 1 mass% or less, more preferably 0.9 mass% or less. The lower limit of the water content is preferably 0.1 mass% or more from the viewpoint that adhesion force with the glass is adjusted in an appropriate range and penetration resistance can be increased. The water content can be measured by coulometric titration.

[Method for producing resin sheet]

The method for producing the resin sheet of the present invention is not particularly limited, and the resin composition comprising the acetalization product of the present invention may be molded into a sheet shape by, for example, a known method such as extrusion molding, press molding, blow molding, injection molding, or a solution casting method. Among known methods, a method is suitably used where the acetalization product and, if necessary, an additive are fed to an extruder and kneaded and molten, and then a melt-kneaded product obtained is extruded from a die, and drawn by a drawing machine and molded into a sheet shape. The resin temperature in extrusion is preferably 170 to 250°C, more preferably 180 to 240°C, further preferably 190 to 220°C. When the resin temperature in extrusion is equal to or less than the upper limit, the acetalization product is suppressed in decomposition and hardly colored. When the resin temperature in extrusion is equal to or more than the lower limit, the acetalization product is completely molten, and a sheet having a favorable appearance can be obtained and generation of a volatile substance can be suppressed. It is preferable for efficient removal of a volatile substance to remove such a volatile substance through a vent port of an extruder by reduced pressure.

[Laminated glass interlayer]

The resin sheet of the present invention is suitably used as a laminated glass interlayer (hereinafter, also simply referred to as "interlayer"). Accordingly, the present invention encompasses a laminated glass interlayer, comprising the resin sheet of the present invention. The laminated glass interlayer of the present invention is suitably used in various applications of moving vehicles such as automobiles, buildings, or solar cells. In one embodiment of the present invention, the laminated glass interlayer of the present invention is excellent in transparency, self-supporting ability, and adhesiveness to a substrate such as glass, and thus is particularly suitably used as a laminated glass interlayer, for structure materials.

[Laminated glass]

The present invention also encompasses a laminated glass comprising two glass plates, and the laminated glass interlayer of the present invention, disposed between the two glass plates. The laminated glass comprises the laminated glass interlayer comprising the resin sheet, and thus has excellent transparency.

Such a glass plate to be laminated with the interlayer can be, for example, inorganic glass such as float glass, reinforced glass, wired plate glass, or heat-absorbing plate glass, or conventionally known organic glass such as polymethyl methacrylate or polycarbonate. These may be each colorless or colored. These may be used singly or in combination of two or more kinds thereof. The thickness of one glass plate is not particularly limited, and may be, for example, 1 to 10 mm, preferably 2 to 6 mm. The thicknesses of the two glass plates may be the same or different.

The laminated glass of the present invention can be produced by a conventionally known method. Examples include a method using a vacuum laminator apparatus, a method using a vacuum bag, a method using a vacuum ring, or a method using a nip roll. After temporary adhesion by the method, the resultant may be loaded to an autoclave and subjected to main adhesion.

In the case of use of a vacuum laminator apparatus, the laminated glass can be produced by, for example, laminating the glass plates, the interlayer, and any layer (for example, adhesive resin layer) under a reduced pressure of $1 \times 10^{-6}$ to $1 \times 10^{-1}$ MPa at 60 to 200°C, in particular, 80 to 160°C. A method using a vacuum bag or a vacuum ring has been described in, for example, EP 1235683 B, and the laminated glass can be produced by laminating the glass plates, the interlayer, and any layer under a pressure of about $2 \times 10^{-2}$ to $3 \times 10^{-2}$ MPa at 100 to 160°C.

Examples of a production method using a nip roll include a method including stacking the glass plates, the interlayer and any layer, and performing the first temporary adhesion at a temperature equal to or less than the flow starting temperature of the acetalization product and furthermore pressure bonding at a temperature near the flow starting temperature. Specific examples include a method including heating to 30 to 70°C by an infrared heater or the like and then degassing by a roll, and furthermore heating to 50 to 120°C and then pressure bonding by a roll for adhesion or temporary adhesion.

In the case of loading to an autoclave after temporary adhesion, and then further pressure bonding, operating conditions of an autoclave step are appropriately selected depending on the thickness and configuration of the laminated glass, and treatment is preferably made, for example, under a pressure of 1 to 1.5 MPa at 130 to 145°C for 1 to 3 hours.

The acetalization product has high transparency, and thus the laminated glass of the present invention is excellent in transparency. In one embodiment of the present invention, the haze of the laminated glass is preferably 5% or less, more preferably 3% or less, further preferably 2% or less, particularly preferably 1% or less. As the haze is smaller, the laminated glass is increased in transparency, and thus the lower limit value is not particularly limited and may be, for example, 0.01%. The haze of the laminated glass is measured with a haze meter according to JIS K7136:2000.

In one embodiment of the present invention, the laminated glass of the present invention is excellent in transparency even after heating to 140°C and then slow cooling from 140°C to 23°C at a rate of 0.1°C/min. The haze after the laminated glass is heated to 140°C and slow cooled from 140°C to 23°C at a rate of 0.1°C/min (haze in slow cooling) is preferably 5% or less, more preferably 3% or less, further preferably 2% or less, particularly preferably 1% or less. As the haze is smaller, the laminated glass is increased in transparency, and thus the lower limit value is not particularly limited and may be, for example, 0.01%. The haze in slow cooling is also measured with a haze meter according to JIS K7136:2000.

In one embodiment of the present invention, the laminated glass is excellent in adhesion force between the glass plate and interlayer. In one embodiment of the present invention, the maximum shear stress measured by a compressive shear strength test described in WO 1999/058334 may be preferably 20 to 40 MPa, more preferably 22 to 38 MPa, further preferably 24 to 36 MPa. When the maximum shear stress is equal to or more than the lower limit, the adhesion force is high enough to result in a tendency to enable suppressing the scattering of glass in glass breakage, and when the maximum shear stress is equal to or less than the upper limit, deterioration in penetration resistance in glass breakage can be suppressed.

The laminated glass of the present invention can be suitably used in, for example, a front windshield for automobiles, a side glass for automobiles, a sunroof for automobiles, a rear glass for automobiles, a glass for head-up displays, a laminate for facades, exterior walls, or roofs, a building material such as a panel, a door, a window, a wall, a roof, a sunroof, a sound-insulating wall, a display window, a balcony, or a handrail wall, a partition glass member for conference rooms, or a solar panel, but not limited to these applications.

Examples

Hereinafter, the present invention will be specifically described with reference to Examples and Comparative Examples, but the present invention is not limited to the following Examples.

Analysis methods and measurement methods of various physical properties of ethylene/vinyl alcohol copolymers used as raw materials in Examples and Comparative Examples and acetalization products obtained of these ethylene/vinyl alcohol copolymers, and evaluation methods of resin sheets and laminated glasses are shown below.

<Content of each monomer unit and degree of acetalization>

The contents (unit: mol%) of the ethylene unit, the vinyl alcohol unit, and the acetal unit as a vinyl alcohol unit acetalized, and the degree of acetalization, with respect to each of ethylene/vinyl alcohol copolymers (EVOHs 1 to 5) used as raw materials in Examples and Comparative Examples, and acetalization products of these ethylene/vinyl alcohol copolymers, obtained in Examples and Comparative Examples, were analyzed as follows.

Each of the ethylene/vinyl alcohol copolymers was dissolved in dimethylsulfoxide (DMSO) at 120°C, and the resulting DMSO solution was cooled to room temperature. Thereafter, N,N-dimethyl-4-aminopyridine and acetic anhydride were added to the DMSO solution, and stirred and reacted for 1 hour. The copolymer was re-precipitated from the resulting reaction liquid with ionexchange water and acetone and washed, and furthermore dried, to thereby obtain each ethylene/vinyl acetate copolymer. A solution of the ethylene/vinyl acetate copolymer obtained, in deuterated dimethylsulfoxide (DMSO-d6), was subjected to measurement with a 400-MHz proton NMR measurement apparatus at a cumulative number of 256. The ethylene unit content (n) with respect to the total monomer unit constituting the ethylene/vinyl alcohol copolymer was calculated from the intensity ratio between a peak (peak at 1.1 to 1.9 ppm) of a methine proton derived from the ethylene unit and the vinyl acetate unit and a peak (peak at 2.0 ppm) of a terminal methyl proton derived from the vinyl acetate unit in the ethylene/vinyl acetate copolymer, in a spectrum obtained.

The ethylene unit is not affected by acetalization reaction, and thus the ethylene unit content (n) in the ethylene/vinyl alcohol copolymer is equal to the ethylene unit content (n) with respect to the total monomer unit constituting an acetalization product of EVOH, obtained after acetalization.

The vinyl alcohol unit content (l), the vinyl acetate unit content (m) and the acetal unit content (k) with respect to the total monomer unit constituting the acetalization product of EVOH were determined by the following method. A DMSO-d6 solution of the acetalization product of EVOH was subjected to measurement with a 400-MHz proton NMR measurement apparatus at a cumulative number of 256. The content of each of the monomer units was calculated from the intensity ratio between a peak (peak at 1.0 to 1.8 ppm) of a methine proton derived from the ethylene unit, the vinyl alcohol unit and the vinyl acetate unit and a peak (peak at 0.8 to 1.0 ppm) of a terminal methyl proton derived from the acetal unit in a spectrum obtained, and the ethylene unit content (n) of the ethylene/vinyl alcohol copolymer.

The degree of acetalization of the acetalization product of EVOH was determined with the vinyl alcohol unit content (l), the vinyl acetate unit content (m) and the acetal unit content (k) determined above, by the following expression.

$$\text{Degree of acetalization (mol\%)} = \{k/(k + l + m)\} \times 100$$

<Melt flow rate (MFR)>

The melt flow rates of the ethylene/vinyl alcohol copolymers (dried) used in Examples and Comparative Examples were measured under conditions of 190°C and a load of 2.16 kg according to JIS K7210:2014.

<Pore median diameter and pore surface area>

An ethylene/vinyl alcohol copolymer porous object obtained in each of Production Examples described below or the EVOH acetalization product obtained in each of Examples and Comparative Examples was freeze-dried at -80°C, thereafter 0.5 g thereof was taken in a 5-cc standard cell (stem volume 0.4 cc) for powders, and the pore median diameter and the pore surface area, in a pore diameter range of 0.005 to 100 μm, were measured with Micromeritics pore distribution measurement apparatus (AutoPore V9620 manufactured by SHIMADZU CORPORATION) under a condition of an initial pressure of 2.6 kPa. The pore median diameter was a median diameter (d50) of all pores having a pore diameter in a range of 0.005 to 100 μm in a Log derivative pore volume distribution. Here, mercury parameters were as follows: mercury contact angle 130 degrees, mercury surface tension 485 hynes/cm.

<Presence or absence of pore in gravity center section of porous object>

A porous object cross section in a direction perpendicular to the orientation direction of pores (extrusion direction), passing through the gravity center of each ethylene/vinyl alcohol copolymer porous object obtained in Production Examples described below, was produced with a single-edged razor blade, under freezing by liquid nitrogen. The porous object cross section produced was observed with a scanning electron microscope (SEM, SU-70 manufactured by Hitachi High-Tech Corporation), and whether or not such each porous object contained a pore in the gravity center section was evaluated.

<Average particle diameter>

The average particle diameter of a measurement specimen (freeze-dried EVOH porous pellet) of 100 g of each ethylene/vinyl alcohol copolymer obtained in Production Examples 1 to 5 described below was measured with "CAMSIZER XT" manufactured by Verder Scientific GmbH & Co. KG. The average particle diameter was defined by a particle diameter (Q3 50.0%) at which a cumulative particle size distribution of an equivalent circle particle diameter calculated by a dynamic image analysis method according to ISO 13322-2 (2006), from the smaller particle diameter, reached 50% (volume basis).

<Amount of heat of crystal fusion (ΔH)>

The amount of heat of crystal fusion (ΔH) was measured with a differential scanning calorimeter (DSC) (TGA/DSC1 Star System manufactured by Mettler Toledo), by heating a sample with a melt-kneaded product of the acetalization product of EVOH obtained in each of Examples and Comparative Examples, from 25°C to 230°C at a rate of temperature rise of 10°C/min to thereby melt the sample, cooling the sample from 230°C to -30°C at a rate of temperature drop of 10°C/min, and then again raising the temperature from -30°C to 230°C at a rate of temperature rise of 10°C/min.

<Transparency>

(Haze of resin sheet)

A test piece of 20 mm length × 5 mm width was cut out from the resin sheet obtained in each of Examples and Comparative Examples, and thus the test piece was obtained. The haze of the test piece obtained was measured with a haze meter (SH7000 manufactured by NIPPON DENSHOKU INDUSTRIES Co., Ltd.), according to JIS K7136:2000.

(Haze of laminated glass during slow cooling (haze in slow cooling))

The laminated glass obtained in each of Examples and Comparative Examples was cut to a size of 25 mm × 25 mm, to thereby obtain a test sample. The test sample obtained was heated to 140°C and then slow-cooled to 23°C at a rate of 0.1°C/min. The haze of the test sample after slow-cooling operation was measured with a haze meter (SH7000 manufactured by NIPPON DENSHOKU INDUSTRIES Co., Ltd.) according to JIS K7136:2000.

<Self-supporting ability under high-temperature environment (storage elastic modulus at 50°C)>

A test piece of 20 mm length × 5 mm width was cut out from the resin sheet obtained in each of Examples and Comparative Examples, and the storage elastic modulus (E') was measured with a dynamic viscoelasticity measurement apparatus (manufactured by UBM) under conditions of a measurement temperature of 50°C and a frequency of 1 Hz. The value obtained serves as an index of self-supporting ability of a laminated glass interlayer under a high-temperature environment in the case of use of the resin sheet as the laminated glass interlayer.

Pellet-shaped ethylene/vinyl alcohol copolymers (EVOH 1 to EVOH 5) produced by the following method were used as raw materials in Examples and Comparative Examples.

<Production Example 1>

An EVOH solution comprising 100 parts by mass of EVOH having an ethylene unit content of 44 mol% and a degree of saponification of 99.98 mol%, 60 parts by mass of methanol and 40 parts by mass of water was continuously fed from the top of a plate column having a diameter of 0.3 m and a number of plates of 10, water vapor was blown in from the bottom, and the EVOH solution and water vapor were counter-currently contacted. The temperature in the column was 130°C, and the pressure in the column was 0.3 MPa. Water-containing EVOH obtained by counter-currently contacting water vapor was drained from the bottom of the column. The temperature of the water-containing EVOH obtained was 120°C, and the water content rate was 52.4 mass%. The methanol content rate was 0.02 mass%.

The water-containing EVOH was fed at 42 kg/hr to a twin-screw extruder having a back slit, and extruded with a die having eight pores of 3.0 mm in diameter, attached to the tip of the extruder, under the following conditions, and a molten product thereof was cut at a distance of 0.05 mm from the die, with a hot cutter having two blades, to thereby obtain an EVOH porous object of a flat sphere-shaped pellet. The flow rate of circulating water of the cutter was 300 L/min, and the number of rotations of the cutter was 3000 rpm. Here, the resin temperature (exit) was 95°C, and the water content was 34 mass%.

<Conditions of twin-screw extruder>

L/D: 14
Diameter: 30 mm
Screw: full-flight
Number of rotations: 300 rpm
Cylinder temperature: 90°C

Die temperature: 120°C

The EVOH porous object obtained was washed with water at 50°C until 0.002 mass% of sodium acetate in terms of sodium was achieved, and washing water was filtered off, to thereby obtain a porous object (EVOH 1) of a flat sphere pellet-shaped ethylene/vinyl alcohol copolymer.

EVOH 1 obtained was a flat sphere-shaped pellet having an average particle diameter of 3.2 mm. It was confirmed from the results of observation with an electron microscope that the pellet of EVOH 1 contained a pore having a diameter of 0.003 $\mu$m to 100 $\mu$m and had a pore median diameter of 0.07 $\mu$m, contained a pore in a gravity center section of the porous object, and contained, in a porous object cross section passing through the gravity center of the porous object, a pore in a region corresponding to 10% or less of a distance L from the gravity center of the cross section, under the assumption that the distance L was the shortest distance in a distance from the gravity center of the cross section to a porous object surface.

The pore median diameter, the average particle diameter, and the pore surface area of EVOH 1 obtained are shown in Table 1.

<Production Example 2>

A pellet-shaped porous object (EVOH 2) of an ethylene/vinyl alcohol copolymer was obtained in the same manner as in Production Example 1 except that the ethylene content in Production Example 1 was 32 mol%.

The pellet of EVOH 2 obtained had a flat sphere shape having an average particle diameter of 3.2 mm. It was confirmed from the results of observation with an electron microscope that the pellet of EVOH 2 contained a pore having a diameter of 0.003 $\mu$m to 100 $\mu$m, had a pore median diameter of 0.11 $\mu$m, contained a pore in a gravity center section of the porous object, and contained a pore in a region corresponding to 10% or less of the distance L from the gravity center of the porous object cross section.

The pore median diameter, the average particle diameter and the pore surface area of EVOH 2 obtained are shown in Table 1.

<Production Example 3>

A pellet-shaped porous object (EVOH 3) of an ethylene/vinyl alcohol copolymer was obtained in the same manner as in Production Example 1 except that the ethylene content in Production Example 1 was 27 mol%.

The pellet of EVOH 3 obtained had a flat sphere shape having an average particle diameter of 3.2 mm. It was confirmed from the results of observation with an electron microscope that the pellet of EVOH 3 contained a pore having a diameter of 0.003 $\mu$m to 100 $\mu$m, had a pore median diameter of 0.11 $\mu$m, contained a pore in a gravity center section of the porous object, and contained a pore in a region corresponding to 10% or less of the distance L from the gravity center of the porous object cross section.

The pore median diameter, the average particle diameter and the pore surface area of EVOH 3 obtained are shown in Table 1.

<Production Example 4>

The ethylene/vinyl alcohol copolymer (EVOH 1) obtained in Production Example 1 was charged into a twin-screw extruder, and pelletized at a resin temperature of a discharge port, of 100°C. The amount of EVOH 1 charged per unit time was 10 kg/hr. Specifications of the twin-screw extruder are shown below.

<Conditions of twin-screw extruder>

L/D: 45.5
Diameter: 30 mm$\Phi$
Screw: completely intermeshed in the same direction
Number of rotations: 300 rpm
Die diameter: 3.0 mm$\Phi$
Number of holes in die: 5

The pellet obtained was dried with a flow drier at 100°C for 15 hours, and subsequently dried with a static drier at 100°C for 15 hours, to thereby obtain a pellet-shaped ethylene/vinyl alcohol copolymer (EVOH 4).

The pellet of EVOH 4 obtained was a sphere having an average particle diameter of 2.9 mm, and observed with an electron microscope, and as a result, it was not confirmed that EVOH 4 contained a pore. The average particle diameter and the pore surface area of EVOH 4 obtained are shown in Table 2.

<Production Example 5>

The ethylene/vinyl alcohol copolymer (EVOH 2) obtained in Production Example 2 was pelletized and dried in the same manner as in Production Example 4, and an ethylene/vinyl alcohol copolymer (EVOH 5) was thus obtained.
The pellet of EVOH 5 obtained was a sphere having an average particle diameter of 3.1 mm, and observed with an electron microscope, and as a result, it was not confirmed that EVOH 5 contained a pore. The average particle diameter and the pore surface area of EVOH 5 obtained are shown in Table 2.

<Example 1>

(Synthesis of acetalization product of ethylene/vinyl alcohol copolymer)

100 parts by mass of the ethylene/vinyl alcohol copolymer porous object (EVOH 2) obtained in Production Example 2 was dispersed in 377 parts by mass of water, 20 parts by mass of isobutylaldehyde was added, and the resulting dispersion was heated to 60°C under stirring. The stirring was continued for 2 hours, and the dispersion of the ethylene/vinyl alcohol copolymer was impregnated with isobutylaldehyde. Thereafter, 10 parts by mass of 1 M hydrochloric acid was added to the dispersion at 60°C, and acetalization reaction was performed. After 2 hours from the first addition of hydrochloric acid, 40 parts by mass of 1 M hydrochloric acid was added, and acetalization reaction was performed for further 4 hours. The acetalization product generated by acetalization was in a solid state. Thereafter, 75 parts by mass of 1 M sodium hydroxide was added to the dispersion to perform neutralization, and thus acetalization reaction was stopped. The dispersion was stirred at 60°C for further 8 hours in order to neutralize also the solid interior of the acetalization product. The acetalization product neutralized was collected by filtration, and 500 parts by mass of ion-exchange water was added to the acetalization product and stirred at 60°C for 6 hours, to thereby wash the acetalization product. The acetalization product was again collected by filtration, and 500 parts by mass of ion-exchange water was added to the acetalization product and stirred at 60°C for 6 hours, to thereby perform the second washing of the acetalization product. Washing water was filtered off, and vacuum drying was carried out at 60°C for 8 hours, to thereby obtain 109 parts by mass (yield 100%) of a pellet-shaped acetalization product of EVOH. The acetalization product obtained of EVOH contained 32 mol% of an ethylene unit and had a degree of acetalization of 29 mol%. The acetalization product obtained of EVOH was a porous object having the pore structure as in EVOH 2 as a raw material.
The acetalization product of EVOH, obtained above, was melt-kneaded with Labo Plastomill ("4M150" manufactured by Toyo Seiki Seisaku-sho, Ltd.) at a chamber temperature of 200°C and a number of rotations of 100 rpm for 3 minutes, and the content of the chamber was taken out and cooled, to thereby obtain a melt-kneaded product.
The melt-kneaded product obtained was compression molded at a pressure of 50 kgf/cm$^2$ (50 MPa) for 5 minutes under heating at 210°C, to thereby obtain a resin sheet having a thickness of 0.8 mm.
The sheet obtained was sandwiched between two float glasses of 2.7 mm thickness and charged to a vacuum laminator (1522N manufactured by Nisshinbo Mechatronics, Inc.), and the interior of the vacuum laminator was depressurized at 100°C for 1 minute. The resultant was pressed at 30 kPa for 5 minutes with the reduced pressure and the temperature being retained, and thus a temporary adhesion body was obtained. The temporary adhesion body obtained was charged to an autoclave, and treated at 140°C and 1.2 MPa for 30 minutes, to thereby obtain a laminated glass.

<Examples 2 to 5>

Pellet-shaped acetalization products of EVOH were each obtained by the same method as in Example 1 except that the type of the ethylene/vinyl alcohol copolymer used and the amount of aldehyde added were as shown in Table 1. The acetalization products obtained of EVOH were each a porous object having the same pore structure as in the ethylene/vinyl alcohol copolymer as a raw material. The acetalization products of EVOH were used to obtain respective melt-kneaded products, resin sheets and laminated glasses in the same manner as in Example 1.

<Example 6>

100 parts by mass of the ethylene/vinyl alcohol copolymer porous object (EVOH 2) obtained in Production Example 2 was dispersed in 315 parts by mass of methanol, and the resulting dispersion was heated to 60°C under stirring. To the dispersion was added 40 parts by mass of 1 M hydrochloric acid, then 17 parts by mass of isobutylaldehyde was added and dispersed, and acetalization reaction was performed at 60°C kept. As the reaction progressed, EVOH 2 was dissolved and a homogeneous solution was obtained. After retention for 6 hours from the start of the reaction, 6.4 parts by mass of sodium carbonate was added to the reaction liquid to perform neutralization, and thus the acetalization reaction was stopped. After 500 parts by mass of methanol was added to the reaction liquid subjected to neutralization, and homogenized, the reaction liquid was added dropwise to 2000 parts by mass of ion-exchange water, to thereby precipitate the acetalization product generated by the acetalization reaction. The acetalization product precipitated was collected by filtration and dispersed in ion-exchange water. The resulting dispersion was stirred at 23°C for 15 minutes, to thereby wash the acetalization product with water, and ion-exchange water was filtered off. Such an operation of washing with water and filtration was further repeated twice. Thereafter, vacuum drying was carried out at 60°C for 8 hours, to thereby obtain 102 parts by mass (yield 93%) of a powdery acetalization product of EVOH. The acetalization product obtained of EVOH contained 32 mol% of an ethylene unit and had a degree of acetalization of 25 mol%. The acetalization product obtained of EVOH had no pore.

The acetalization product obtained of EVOH was used to obtain a melt-kneaded product, a resin sheet and a laminated glass in the same manner as in Example 1.

Various evaluation results of the melt-kneaded products, the resin sheets and the laminated glasses obtained in Examples are shown in Table 1.

[Table 1]

| | | Examples | | | | | |
|---|---|---|---|---|---|---|---|
| | | 1 | 2 | 3 | 4 | 5 | 6 |
| | | EVOH 2 | EVOH 1 | EVOH 1 | EVOH 1 | EVOH 3 | EVOH 2 |
| Ethylene/vinyl alcohol copolymer | Ethylene unit (mol%) | 32 | 44 | 44 | 44 | 27 | 32 |
| | Vinyl alcohol unit (mol%) | 68 | 56 | 56 | 56 | 73 | 68 |
| | MFR (g/10 min) | 1.6 | 5.5 | 5.5 | 5.5 | 8.0 * | 1.6 |
| | Pore median diameter ($\mu$m) | 0.11 | 0.07 | 0.07 | 0.07 | 0.11 | 0.11 |
| | Pore surface area (m$^2$/g) | 36 | 33 | 33 | 33 | 32 | 36 |
| | Average particle diameter (mm) | 3.2 | 3.2 | 3.2 | 3.2 | 3.2 | 3.2 |
| Acetalization reaction conditions | Raw material EVOH (parts by mass) | 100 | 100 | 100 | 100 | 100 | 100 |
| | Isobutyl aldehyde (parts by mass) | 20 | 17 | 8.5 | 25.5 | 25 | 17 |
| | Solvent | Water | Water | Water | Water | Water | Methanol |
| | Reaction manner | Solid-liquid method | Solid-liquid method | Solid-liquid method | Solid-liquid method | Solid-liquid method | Dissolution method |

(continued)

| | | Examples | | | | | |
|---|---|---|---|---|---|---|---|
| | | 1 | 2 | 3 | 4 | 5 | 6 |
| Acetalization product of EVOH | Degree of acetalization (mol%/PVA unit) | 29 | 30 | 15 | 45 | 37 | 25 |
| | Ethylene unit (mol%) | 32 | 44 | 44 | 44 | 27 | 32 |
| | Vinyl alcohol unit (mol%) | 48 | 39 | 48 | 31 | 46 | 51 |
| | Amount of heat of crystal fusion $\Delta H$ (J/g) | 38.5 | 30.4 | 49.5 | 17.6 | 27.2 | 0 |
| | Resin yield (%) | 100 | 100 | 100 | 100 | 100 | 93 |
| | Shape | Pellet | Pellet | Pellet | Pellet | Pellet | Powder |
| Transparency | Haze (%) of resin sheet | 0.6 | 0.5 | 0.8 | 0.4 | 0.5 | 0.5 |
| | Haze in slow cooling (%) of laminated glass | 0.6 | 0.5 | 0.9 | 0.4 | 0.6 | 0.6 |
| Self-supporting ability under high-temperature environment | Storage elastic modulus (MPa) at 50°C | 1100 | 800 | 1410 | 430 | 630 | 560 |
| * Measured under conditions of 210°C and a load of 2160 g | | | | | | | |

<Comparative Examples 1 to 2>

Acetalization products of EVOH were each obtained by the same method as in Example 1 except that except that the type of the ethylene/vinyl alcohol copolymer used as a raw material and the amount of aldehyde added were as shown in Table 2. The acetalization products of EVOH were used to obtain respective melt-kneaded products, resin sheets and laminated glasses in the same manner as in Example 1.

<Comparative Example 3>

100 parts by mass of the ethylene/vinyl alcohol copolymer (EVOH 4) obtained in Production Example 4 was dispersed in a mixed solvent of 500 parts by mass of methanol and 50 parts by mass of ion-exchange water, and the resulting dispersion was heated to 60°C under stirring, to thereby completely dissolve the copolymer. One hour was taken until the copolymer was completely dissolved and a homogeneous solution was obtained. 40 parts by mass of 1 M hydrochloric acid was added to the homogeneous solution of the ethylene/vinyl alcohol copolymer, the resultant was stirred and mixed, then 33 parts by mass of isobutylaldehyde was added and retained at 60°C, and acetalization reaction was performed. After retention for 6 hours from the start of the reaction, 6.4 parts by mass of sodium carbonate was added for neutralization to thereby stop the acetalization reaction, and thus a reaction liquid comprising the acetalization product was obtained. In order to decrease the size of precipitation in a subsequent step of precipitating the acetalization product generated by the acetalization reaction, by re-precipitation, 500 parts by mass of methanol was added to the reaction liquid to perform dilution. To the solution diluted was added dropwise 2000 parts by mass of ion-exchange water, to thereby precipitate the acetalization product generated. The precipitated product was collected by filtration, and again dispersed in ion-exchange water and stirred at 23°C for 15 minutes to thereby wash the acetalization product with water and collect it by filtration. Such an operation of washing with water and filtration was further repeated twice. Thereafter, vacuum drying was carried out at 60°C for 8 hours, to thereby obtain 102 parts by mass (yield 93%) of a powdery acetalization product of EVOH. The acetalization product obtained of EVOH contained 44 mol% of an ethylene unit and had a degree of acetalization of 59 mol%. The acetalization product obtained of EVOH was used to obtain a melt-kneaded product, a resin sheet and a laminated glass in the same manner as in Example 1.

Various evaluation results of the melt-kneaded products, the resin sheets and the laminated glasses obtained in Comparative Examples are shown in Table 2.

[Table 2]

|  |  | Comparative Examples | | |
|---|---|---|---|---|
|  |  | 1 | 2 | 3 |
|  |  | EVOH 4 | EVOH 5 | EVOH 4 |
| Ethylene/vinyl alcohol copolymer | Ethylene unit (mol%) | 44 | 32 | 44 |
|  | Vinyl alcohol unit (mol%) | 56 | 68 | 56 |
|  | MFR (g/10 min) | 5.5 | 1.6 | 5.5 |
|  | Pore median diameter ($\mu$m) | - | - | - |
|  | Pore surface area (m$^2$/g) | 18 | 17 | 18 |
|  | Average particle diameter (mm) | 2.9 | 3.1 | 2.9 |
| Acetalization reaction conditions | Raw material EVOH (parts by mass) | 100 | 100 | 100 |
|  | Isobutylaldehyde (parts by mass) | 16 | 21 | 33 |
|  | Solvent | Water | Water | Methanol/ Water |
|  | Reaction manner | Solid-liquid method | Solid-liquid method | Homogeneous method |
| Acetalization product of EVOH | Degree of acetalization (mol%/PVA unit) | 28 | 30 | 59 |
|  | Ethylene unit (mol%) | 44 | 32 | 44 |
|  | Vinyl alcohol unit (mol%) | 40 | 48 | 32 |
|  | Amount of heat of crystal fusion $\Delta H$ (J/g) | 32.8 | 35.4 | 0 |
|  | Resin yield (%) | 100 | 100 | 93 |
|  | Shape | Pellet | Pellet | Powder |
| Transparency | Haze (%) of resin sheet | 22 | 32 | 0.8 |
|  | Haze in slow cooling (%) of laminated glass | 24 | 34 | 0.9 |
| Self-supporting ability under high-temperature environment | Storage elastic modulus (MPa) at 50°C | 890 | 1250 | 7 |

It was confirmed as shown in Table 1 that the acetalization product of EVOH obtained in each of Examples 1 to 6 was excellent in transparency even in a case where the ethylene/vinyl alcohol copolymer was not dissolved in any solvent before acetalization and was subjected to acetalization in a heterogeneous system. On the contrary, the acetalization product of EVOH obtained in each of Comparative Examples 1 to 2 was low in transparency as shown in Table 2. In Examples 1 to 6, the EVOH porous object used as a raw material had sufficient strength, and no blocking or the like of any production line, by the porous object, was confirmed. In Comparative Example 3, a long time was taken for the step of dissolving ethylene/vinyl alcohol in a solvent before acetalization. Furthermore, the acetalization product of EVOH obtained in Comparative Example 3 was low in storage elastic modulus at 50°C, and insufficient in self-supporting ability under a high-temperature environment.

<Examples 7 to 10>

Pellet-shaped acetalization products of ethylene/vinyl alcohol copolymers were each obtained by the same method as in Example 1 except that the type of the ethylene/vinyl alcohol copolymer used as a raw material and reaction conditions were as shown in Table 3. The acetalization products obtained of ethylene/vinyl alcohol copolymers were each a porous object having the same pore structure as in the ethylene/vinyl alcohol copolymer as a raw material. The acetalization products obtained of ethylene/vinyl alcohol copolymers were used to obtain respective melt-kneaded products, resin sheets and laminated glasses were obtained with the in the same manner as in Example 1.

<Comparative Example 4>

An acetalization product of EVOH was obtained by the same method as in Example 1 except that the type of the ethylene/vinyl alcohol copolymer used as a raw material and reaction conditions were changed as shown in Table 3. The acetalization product obtained of EVOH was used to obtain a melt-kneaded product, a resin sheet and a laminated glass in the same manner as in Example 1.

Various evaluation results of the melt-kneaded products, the resin sheets and the laminated glasses obtained in Examples 7 to 10 and Comparative Example 4 are shown in Table 3.

[Table 3]

| | | Examples | | | | Comparative Example |
|---|---|---|---|---|---|---|
| | | 7 | 8 | 9 | 10 | 4 |
| Ethylene/vinyl alcohol copolymer (EVOH) | | EVOH 2 | EVOH 1 | EVOH 3 | EVOH 1 | EVOH 4 |
| | Ethylene unit (mol%) | 32 | 44 | 27 | 44 | 44 |
| | Vinyl alcohol unit (mol%) | 68 | 56 | 73 | 56 | 56 |
| | Pore median diameter ($\mu$m) | 0.11 | 0.07 | 0.11 | 0.07 | - |
| | Pore surface area ($m^2$/g) | 36 | 33 | 32 | 33 | 18 |
| | Average particle diameter (mm) | 3.2 | 3.2 | 3.2 | 3.2 | 2.9 |
| | MFR (g/10min) at 190°C, 2.16 kg | 1.6 | 5.5 | 8.0* | 5.5 | 5.5 |

(continued)

| | | Examples | | | | Comparative Example |
|---|---|---|---|---|---|---|
| | | 7 | 8 | 9 | 10 | 4 |
| Acetalization reaction conditions | Raw material EVOH (parts by mass) | 100 | 100 | 100 | 100 | 100 |
| | 1 M hydrochloric acid (parts by mass) (first) | 10 | 10 | 10 | 10 | 10 |
| | 1 M hydrochloric acid (parts by mass) (second) | 40 | 40 | 40 | 40 | 40 |
| | Isobutylaldehyde (parts by mass) | 20.0 | 16.7 | 23.3 | 23.3 | 16.7 |
| | Aldehyde impregnation conditions | 60°C/2h | 60°C/2h | 60°C/2h | 60°C/2h | 60°C/2h |
| | Solvent | Water | Water | Water | Water | Water |
| | Reaction manner | Solid-liquid method | Solid-liquid method | Solid-liquid method | Solid-liquid method | Solid-liquid method |
| | 1 M NaOH (parts by mass) | 75 | 75 | 75 | 75 | 75 |
| | Reaction time (h) | 8 | 8 | 8 | 8 | 8 |
| Acetalization product of EVOH | Degree of acetalization (mol%/PVA unit) | 29 | 30 | 30 | 42 | 30 |
| | Ethylene unit (mol%) | 32 | 44 | 27 | 44 | 44 |
| | Vinyl alcohol unit (mol%) | 48 | 39 | 57 | 32 | 39 |
| | Amount of heat of crystal fusion $\Delta H$ (J/g) | 32.1 | 28.9 | 39.0 | 15.5 | 31.0 |
| | Resin yield (%) | 100 | 100 | 100 | 100 | 100 |
| | Shape | Pellet | Pellet | Pellet | Pellet | Pellet |
| Evaluation results | Resin sheet — Haze (%) | 0.5 | 0.3 | 0.7 | 0.3 | 2.7 |
| | Resin sheet — Storage elastic modulus (MPa) @50°C | 1110 | 800 | 1350 | 450 | 920 |
| | Laminated glass — Haze (%) after slow cooling | 0.6 | 0.4 | 0.9 | 0.4 | 5.2 |

(continued)

|  | Examples | | | | Comparative Example |
|---|---|---|---|---|---|
|  | 7 | 8 | 9 | 10 | 4 |
| * Measured under conditions of 210°C and a load of 2160 g | | | | | |

It was confirmed as shown in Table 3 that the acetalization product of EVOH obtained in each of Examples 7 to 10 was excellent in transparency even in a case where the ethylene/vinyl alcohol copolymer was not dissolved in any solvent before acetalization and was subjected to acetalization in a heterogeneous system. On the contrary, the acetalization product of EVOH obtained in Comparative Example 4 was low in transparency. In Examples 7 to 10, the EVOH porous object used as a raw material had sufficient strength, and no blocking or the like of any production line, by the porous object, was confirmed.

**Claims**

1. A method for producing an acetalization product of an ethylene/vinyl alcohol copolymer by acetalization of an ethylene/vinyl alcohol copolymer, wherein the ethylene/vinyl alcohol copolymer is a porous object.

2. The method according to claim 1, wherein a pore median diameter of the porous object is 0.005 $\mu$m or more.

3. The method according to claim 1 or 2, wherein the porous object contains a pore in a gravity center section of the porous object.

4. The method according to any of claims 1 to 3, wherein a pore surface area of the porous object is 25 m$^2$/g or more.

5. The method according to any of claims 1 to 4, wherein an ethylene content in the ethylene/vinyl alcohol copolymer is 20 to 60 mol%.

6. The method according to any of claims 1 to 5, wherein an average particle diameter of the porous object is 1 mm or more.

7. The method according to any of claims 1 to 6, wherein the porous object is pellet-shaped.

8. The method according to any of claims 1 to 7, wherein the acetalization is performed by solid-liquid reaction.

9. The method according to any of claims 1 to 8, wherein a dispersion comprising the ethylene/vinyl alcohol copolymer and a solvent is prepared, and an aldehyde and a catalyst are added in the listed order, to the dispersion, to perform acetalization.

10. The method according to claim 9, wherein the solvent contains water.

11. An acetalization product of an ethylene/vinyl alcohol copolymer, wherein the acetalization product is a porous object having a pore median diameter of 0.005 $\mu$m or more.

12. A resin sheet comprising the acetalization product of an ethylene/vinyl alcohol copolymer according to claim 11, as a resin component.

13. The resin sheet according to claim 12, wherein a storage elastic modulus at 50°C and a frequency of 1 Hz is 20 MPa or more.

14. A laminated glass interlayer, comprising the resin sheet according to claim 12 or 13.

15. A laminated glass comprising two glass plates, and the laminated glass interlayer according to claim 14, disposed between the two glass plates.

## INTERNATIONAL SEARCH REPORT

| | International application No. |
|---|---|
| | **PCT/JP2022/015060** |

### A. CLASSIFICATION OF SUBJECT MATTER

*C03C 27/12*(2006.01)i; *C08J 3/12*(2006.01)i
FI:  C08J3/12 Z CEX; C03C27/12 D

According to International Patent Classification (IPC) or to both national classification and IPC

### B. FIELDS SEARCHED

Minimum documentation searched (classification system followed by classification symbols)

  C03C27/12; C08J3/12

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/196186 A1 (KURARAY CO., LTD.) 01 October 2020 (2020-10-01) claims (particularly, claim 1), examples | 1-15 |
| A | JP 2016-28139 A (KURARAY CO., LTD.) 25 February 2016 (2016-02-25) examples | 1-15 |
| A | JP 2011-171321 A (KURARAY CO., LTD.) 01 September 2011 (2011-09-01) entire text | 1-15 |

☐ Further documents are listed in the continuation of Box C.     ☑ See patent family annex.

| | |
|---|---|
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **28 April 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/015060**

| Patent document cited in search report | | | Publication date (day/month/year) | Patent family member(s) | | | Publication date (day/month/year) |
|---|---|---|---|---|---|---|---|
| WO | 2020/196186 | A1 | 01 October 2020 | TW | 202102553 | A | |
| JP | 2016-28139 | A | 25 February 2016 | US examples | 2017/0183426 | A1 | |
| JP | 2011-171321 | A | 01 September 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021067294 A
- JP H174201 A
- JP S5365386 A
- JP H11293077 A
- JP 2002121290 A
- WO 03033583 A
- EP 1235683 A
- WO 1999058334 A